# EUROPÄISCHE PATENTSCHRIFT

(11) **EP 2 581 174 B1**
(45) Veröffentlichungstag und Bekanntmachung des Hinweises auf die Patenterteilung: **29.07.2015**
(21) Anmeldenummer: 11184958.4
(22) Anmeldetag: 13.10.2011
(51) Int. Cl.: B25F 1/02, B25G 3/18, A01B 1/22

(54) **Wechselstiel für Gartengeräte oder Haushaltsgeräte**
Exchangeable shaft for garden appliances or domestic appliances
Tige de remplacement pour appareils de jardinage ou appareils ménagers

(43) Veröffentlichungstag der Anmeldung: 17.04.2013
(73) Patentinhaber: Gardtec Ltd., Kowloon, Hong Kong (CN)
(72) Erfinder:
(74) Vertreter: Weickmann & Weickmann

(56) Entgegenhaltungen:
- EP-A2- 0 234 210
- DE-U1- 20 307 366
- DE-U1- 29 703 115
- DE-U1-202008 000 474
- NL-C2- 1 021 550
- US-A1- 2010 147 117

## Beschreibung

Die Erfindung betrifft einen Wechselstiel für Gartengeräte oder Haushaltsgeräte mit einem Schaft, an dem verschiedene Gartengeräte-Aufsätze bzw. Haushaltsgeräte-Aufsätze lösbar befestigbar sind, mindestens einem Verriegelungselement zur Verriegelung eines Gartengeräte-Aufsatzes bzw. Haushaltsgeräte-Aufsatzes mit dem Schaft sowie einem in Längsrichtung des Schafts beweglichen Schlitten, durch dessen Bewegung eine Bewegung des mindestens einen Verriegelungselements bewirkt wird.

### II. Technischer Hintergrund

Bei Gartengeräten bzw. Haushaltsgeräten ist es bekannt, dass die Garten- bzw. Haushaltsgeräte nicht jeweils mit einem eigenen Stiel versehen sind, sondern vielmehr auf einen Stiel verschiedene Gartengeräte- bzw. Haushaltsgeräte-Aufsätze auswechselbar aufsetzbar sind. Dies führt zu erheblicher Platzersparnis bei der Lagerung der Garten- bzw. Haushaltsgeräte, da nur ein Stiel erforderlich ist, an dem verschiedene Aufsätze, z. B. Rechen oder Harke, aufgesetzt werden können. Es ist deshalb z. B. im Küchenschrank, im Keller, in der Garage oder im Gartengerätehäuschen jeweils nur ein Stiel zu lagern, während die kompakten Aufsätze platzsparend z. B. durch Stapeln gelagert werden können. Darüber hinaus hat es auch Kostenvorteile, wenn für eine Vielzahl von Garten- bzw. Haushaltsgeräten nur ein Stiel vorgehalten werden muss. Dem Anwender wird es erleichtert, die für die jeweilige Anwendung erforderlichen passenden Aufsätze flexibel zu erwerben.

Aus der DE 28 30 945 C2 ist ein System verschiedener Garten- bzw. Haushaltsstielgeräte bekannt. Es werden verschiedene Mechanismen von Garten- bzw. Haushaltsstielgeräten, mittels derer Garten- bzw. Haushaltgeräte lösbar an einem Wechselstiel befestigt werden können, beschrieben.

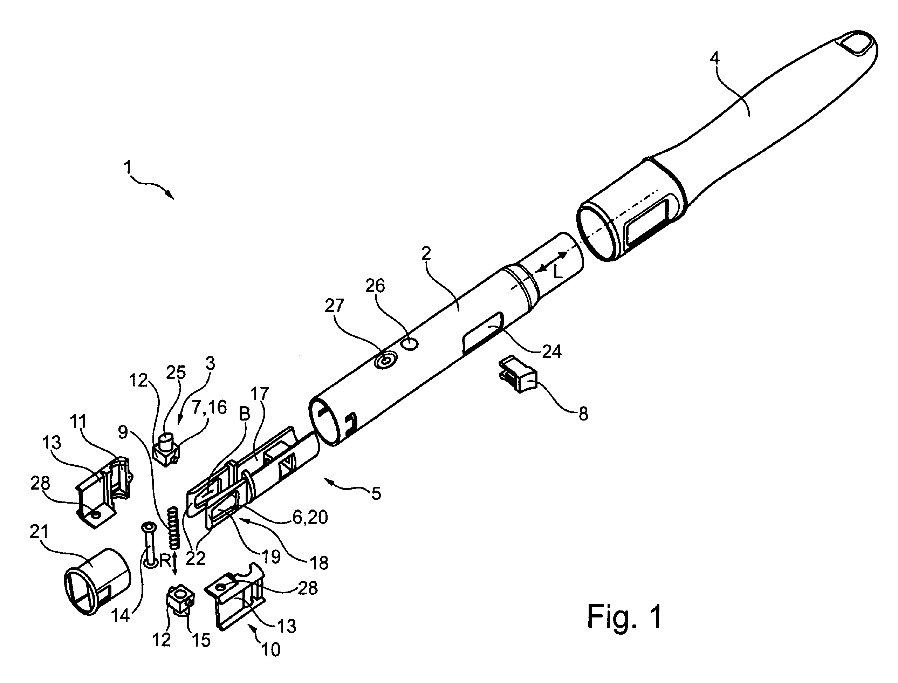

In der Ausführung gemäß Fig. 5 und Fig. 6 der DE 28 30 945 C2 weisen die Arbeitsgeräte 13, 14, 15 (vgl. Fig. 1) einen Kupplungsnippel 16 bzw. 16' auf, der fest und unlösbar mit dem Arbeitsgerät verbunden ist. Der Kupplungsnippel der Arbeitsgeräte wird zum Befestigen des Arbeitsgeräts in eine zylindrische und zentrische Öffnung 23 (vgl. Fig. 2) des Stiels 11 eingeführt. Die Kupplungsnippel 16 weisen eine Angriffsfläche 43 für ein Halteglied 31 des Stiels 11 auf. Das Halteglied 31 ist durch eine aus dem Rohr 17 des Stieles 11 ausgestanzte Federzunge 276 vorgespannt. Durch Verschieben einer Spannhülse 274' in axialer Richtung A des Stiels 11 wird durch Zusammenwirken der Spannhülse 274' mit dem Halteglied 31 der Schaft 272 des Haltegliedes 31 auf die Angriffsfläche 43 des Kupplungsnippels 16 gedrückt. Der Kupplungsnippel 16 wird dadurch mit zwei seiner Sechskantflächen gegen Andruckflächen 25 des Stiels gedrückt. Dadurch wird der Kupplungsnippel 16 gegen Verdrehung gesichert. Die Sicherung in Längsrichtung, d. h. gegen Herausziehen des Aufsatzes aus dem Stiel 11, wird durch Zusammenwirken von Flanken des Halteglieds 31 und Flanken der Angriffsfläche 43 des Kupplungsnippels bewirkt (vgl. die in Fig. 6 dargestellte Verriegelungsstellung).

Nachteilig ist bei der Ausführung der DE 28 30 945 C2, dass die Spannhülse 274' auf der Außenseite des Stiels 11 angebracht ist. Die Spannhülse 274' steht dadurch einer ergonomischen Ausgestaltung des Stiels, z. B. durch Ausbilden von Mulden für die Finger einer Hand, im Weg. Darüber hinaus besteht im Arbeitseinsatz die Gefahr, dass die Spannhülse 274' unabsichtlich verschoben und dadurch der Aufsatz vom Stiel gelöst wird. Dies wird insbesondere zusätzlich dadurch erleichtert, dass das Halteglied 31 durch die Federzunge 276 des Rohres 17 nicht in Richtung der Verriegelungsstellung, sondern in Richtung einer gelösten Stellung vorgespannt ist, so dass das Wechselstielsystem der DE 28 30 945 C2 nicht selbstsichernd ist. Außerdem können leicht Schmutzpartikel in den Raum zwischen dem Rohr 17 und der Spannhülse 274' eindringen, was zu einer nur schwergängig verschiebbaren Spannhülse führt.

Die US 2010/0147117 A1 offenbart eine Verbindungsvorrichtung (sh. z. B. Pos. 10 in Fig. 2), an der typischerweise ein Handgriff ausgebildet ist, die mit einer Hülse (sh. Pos. 50 in Fig. 4, 5), an der typischerweise Handwerkzeuge ausgebildet sind, verbunden werden kann. Nachteilig ist, dass eine Vorspannung des einkuppelnden Zapfens 40 lediglich indirekt über die federvorgespannte Verschiebestange 30 mittels der abgeschrägten Flächen 34, 42 aufgebracht wird. Wird die Verschiebestange 30 beim Lösen entgegen der Federvorspannung bewegt, liegt aufgrund des Kontaktverlustes zwischen den abgeschrägten Flächen 34, 42 der Verschiebestange 30 und des einkuppelnden Zapfens 40 weder Form- noch Kraftschluss zwischen den beiden Bauteilen vor. Der einkuppelnde Zapfen 40 wird somit nicht aktiv durch die Bewegung der Verschiebestange 30 in Richtung des Inneren des Hauptkörpers 20 bewegt, sondern fällt lediglich durch seine Schwerkraft in diese Richtung, soweit der Hauptkörper 20 richtig gehalten wird, so dass der Zapfen 40 in das Innere fallen kann. Wird dagegen der Hauptkörper 20 gedreht gehalten, so bewegt sich der Zapfen 40 überhaupt nicht, wodurch kein Lösen der Hülse 50 von der Verbindungsvorrichtung 10 möglich ist. Auch dann, wenn die Verbindungsvorrichtung 10 so gehalten wird, dass der Zapfen 40 sich durch sein Eigengewicht in Richtung des Inneren der Verbindungsvorrichtung 10 bewegen kann, so besteht die Gefahr, dass er in der Bohrung 26 des Hauptkörpers 20 verkantet, da er nur durch die Wände der Bohrung 26, aber nicht anderweitig geführt wird.

Aus der DE 297 03 115 U1 bzw. der DE 203 07 366 U1 ist jeweils ein Handgriff für Gartenwerkzeuge mit den Merkmalen des Oberbegriffs des Anspruchs 1 bekannt. Das Verriegelungselement ist jeweils als Federstreifen ausgebildet, der in eine Verriegelungsstellung vorgespannt ist, in welcher er den Handgriff mit einem Schaft verriegelt. Mit Hilfe eines verschiebbaren Betätigungselements kann der Federstreifen entgegen seiner Vorspannung aus dem Eingriff mit dem Schaft gebracht werden.

### III. Darstellung der Erfindung

### a) Technische Aufgabe

Der Erfindung liegt daher die Aufgabe zugrunde, einen Wechselstiel für Gartengeräte und Haushaltsgeräte zu entwickeln, bei dem eine größtmögliche Gestaltungsfreiheit im Hinblick auf die Ergonomie des Stiels gegeben ist sowie gleichzeitig ein unbeabsichtigtes Lösen des Aufsatzes vom Wechselstiel wirksam verhindert wird.

### b) Lösung der Aufgabe

Diese Aufgabe wird durch einen Wechselstiel für Gartengeräte und Haushaltsgeräte mit den Merkmalen des Anspruchs 1 gelöst. Weitere Merkmale der Erfindung ergeben sich aus den Unteransprüchen.

Der erfindungsgemäße Wechselstiel für Gartengeräte und Haushaltsgeräte weist einen zumindest teilweise hohlen Schaft auf, an dem verschiedene Gartengeräte bzw. Haushaltsgeräte-Aufsätze lösbar befestigbar sind. Die Aufsätze werden durch mindestens ein Verriegelungselement mit dem Schaft formschlüssig verriegelt. Das mindestens eine Verriegelungselement ist zumindest in einer zu der Längsrichtung des Schafts senkrechten Richtung bewegbar. Es ist dabei in eine Verriegelungsstellung bewegbar, in der der Garten- bzw. Haushaltsgeräteaufsatz, der jeweils an dem Wechselstil zu befestigen ist, mit dem Schaft verriegelt ist. In der Verriegelungsstellung ist der Aufsatz weder in Richtung der Längsachse des Wechselstiels noch um die Längsachse des Wechselstiels beweglich.

Der erfindungsgemäße Wechselstiel weist des Weiteren einen in Längsrichtung des Schafts beweglichen Schlitten auf. Der Schlitten dient zum Steuern der Bewegung des Verriegelungselements. Dafür weist der Schlitten Steuerflächen auf. Die Bewegung des Schlittens bewirkt durch Zusammenwirken der Steuerflächen des Schlittens mit entsprechend ausgestalteten Gegenflächen des Verriegelungselements die Bewegung des mindestens einen Verriegelungselements. Durch die Bewegung des Schlittens kann das Verriegelungselement zwischen der Verriegelungsstellung und einer Entriegelungsstellung bewegt werden. In der Verriegelungsstellung ist der an dem Wechselstiel zu befestigende Gartengeräteaufsatz mit dem Schaft verriegelt, während in der Entriegelungsstellung der an dem Wechselstiel zu befestigende Gartengeräteaufsatz nicht mit dem Schaft verriegelt und somit von dem Schaft abnehmbar ist.

Um ein unerwünschtes Lösen des Aufsatzes vom Schaft z. B. durch selbsttätiges Bewegen des Verriegelungselements von der Verriegelungsstellung in die Entriegelungsstellung zu vermeiden, ist das Verriegelungselement erfindungsgemäß in die Verriegelungsstellung vorgespannt.

Um den Wechselstiel möglichst kompakt zu gestalten und insbesondere das Äußere des Wechselstiels von Bedienungs- und Funktionselementen zum Verriegeln so weit wie möglich frei zu halten, so dass die Außenseite des Stiels ergonomisch gestaltet und beim Hantieren mit dem Wechselstiel ein unerwünschtes Betätigen des Verriegelungsmechanismus vermieden werden kann, ist der Schlitten im Inneren des Schaftes angeordnet.

Um den Schlitten und durch die Bewegung des Schlittens das mindestens eine Verriegelungselement zwischen der Verriegelungsstellung und der Entriegelungsstellung bewegen zu können, weist der Wechselstiel ein Betätigungselement zum Bewegen des Schlittens auf. Das Betätigungselement ist so angeordnet, dass es durch einen Benutzer von außerhalb des Schaftes betätigt werden kann. Durch die Betätigung des Betätigungselements kann der Schlitten im Inneren des Schaftes von einer Ausgangsstellung in eine Betätigungsstellung bewegt werden. Dabei wird das Verriegelungselement entgegen seiner Vorspannung von der Verriegelungsstellung in die Entriegelungsstellung bewegt, indem bei der Bewegung des Schlittens Steuerflächen des Schlittens mit diesen zugeordneten Gegenflächen des Verriegelungselementes zusammenwirken und die für die Bewegung des Verriegelungselementes erforderlichen Kräfte auf dieses übertragen.

Die Bewegung des mindestens einen Verriegelungselements, das zumindest in einer zu der Längsrichtung des Schaftes senkrechten Richtung bewegbar ist, wird zumindest in dieser Bewegungsrichtung durch einen Käfig, der im Schaft ortsfest angeordnet ist, geführt. Dadurch können Kräfte, die auf das Verriegelungselement ausgeübt werden, durch den Käfig aufgenommen werden. Dies führt zu einem verringerten Verschleiß des Verriegelungselements. Durch eine definierte Führung des Verriegelungselements durch einen Käfig kann des Weiteren ein Verkanten der Verriegelungselemente bzw. ein Verklemmen verhindert werden.

Ein im Sinne der Erfindung ausgebildeter Wechselstiel für Garten- und Haushaltsgeräte zeichnet sich vor allem dadurch aus, dass die zur Verriegelung des Aufsatzes mit dem Schaft erforderlichen Bauteile soweit wie möglich im Schaft des Wechselstiels angeordnet sind. Dadurch kann das Äußere des Wechselstiels weitgehend frei von zur Verriegelung erforderlichen Bauteilen gehalten und damit ergonomisch, z. B. durch Anordnen von Griffmulden für die Finger einer Hand, gestaltet werden. Dadurch baut der erfindungsgemäße Wechselstiel für Gartengeräte sehr kompakt.

Des Weiteren wird durch das weitgehende Freihalten des Äußeren des Wechselstiels von Bauteilen des Verriegelungsmechanismus und durch die Vorspannung des mindestens einen Verriegelungselements in die Verriegelungsstellung ein unerwünschtes Lösen des Aufsatzes von dem Schaft während des Hantierens mit dem Wechselstiel bei der Benutzung entweder durch unbeabsichtigtes Betätigen oder durch selbsttätiges Bewegen des Verriegelungselementes in die Entriegelungsstellung vermieden

Um das mindestens eine Verriegelungselement durch den Käfig zu führen, kann der Käfig in einer vorteilhaften Ausgestaltung der Erfindung so gestaltet werden, dass er eine Führungsbahn aufweist und das Verriegelungselement Führungsflächen besitzt, die sich während der Bewegung entlang der Führungsbahn bewegen, und mittels derer die Führung des Verriegelungselements in der Führungsbahn des Käfigs sichergestellt wird.

Der Käfig kann aus zwei Hälften bestehen. Die beiden Hälften können, müssen jedoch nicht identisch gestaltet werden. Die beiden Hälften des Käfigs können durch ein Befestigungselement, durch das auch der Käfig im Schaft ortsfest befestigt ist, miteinander verbunden werden. Das Befestigungselement kann beispielsweise als Niet ausgeführt werden, der durch Bohrungen in den Außenwandungen des Schaftes durch den Schaft hindurchgeführt wird und auf seinen durch die Bohrungen in den Außenwandungen des Schaftes herausragenden Abschnitten umgebördelt wird, um den Niet sicher im Schaft zu befestigen. Dabei kann der Niet durch entsprechende Bohrungen in den Hälften des Käfigs so hindurchgeführt werden, dass die beiden Hälften des Käfigs durch das Befestigungselement miteinander verbunden werden.

Eine vorteilhafte Ausgestaltung der Erfindung ist im Anspruch 4 angegeben. Dabei werden im Wechselstiel genau zwei Verriegelungselemente vorgesehen. Die beiden Verriegelungselemente sind dabei jeweils in eine Verriegelungsstellung vorgespannt. Hierbei ist es neben anderen Anordnungen möglich, die beiden Verriegelungselemente so anzuordnen, dass diese an gegenüber liegenden Seiten des Schaftes angeordnet sind.

In einer weiteren vorteilhaften Ausführung ist zwischen den beiden Verriegelungselementen wenigstens eine Druckfeder angeordnet. Die Druckfeder bewirkt die Vorspannung der beiden Verriegelungselemente in die Verriegelungsstellungen. Dies kann beispielsweise dadurch bewirkt werden, dass sich die wenigstens eine Druckfeder an den beiden Verriegelungselementen abstützt und damit Kräfte auf beide Verriegelungselemente ausübt. Denkbar ist auch, jedes Verriegelungselement mit einer eigenen Druckfeder in die jeweilige Verriegelungsstellung vorzuspannen, so dass insgesamt zwei Druckfedern vorhanden sind.

In einer besonders vorteilhaften Ausführung ist zwischen den beiden Verriegelungselementen genau eine Druckfeder angeordnet, die die Vorspannung der Verriegelungselemente in die Verriegelungsstellungen bewirkt. Dafür ist es insbesondere, wie bereits vorstehend beschrieben, vorteilhaft, wenn die beiden Verriegelungselemente an jeweils gegenüber liegenden Seiten des Schaftes angeordnet sind. Ist der Schaft beispielsweise rohrförmig ausgebildet, können die beiden Verriegelungselemente beispielsweise an einander gegenüber liegenden Rohrwandungen angeordnet sein. Zwischen den beiden Verriegelungselementen ist dann die Druckfeder angeordnet, die die beiden Verriegelungselemente gegeneinander in Richtung der Rohrwand drückt und damit in die Verriegelungsstellungen vorspannt.

In einer besonders vorteilhaften Ausgestaltung weist das Verriegelungselement einen Verriegelungszapfen auf, der sich in der Bewegungsrichtung des Verriegelungselements erstreckt. Der Verriegelungszapfen wirkt im verriegelten Zustand mit einer entsprechend ausgestalteten Verriegelungsfläche des Gartengeräte-Aufsatzes zusammen, so dass der Gartengeräte-Aufsatz durch den Verriegelungszapfen des Verriegelungselements sicher mit dem Schaft des Wechselstiels verriegelt ist. Beispielsweise kann die Verriegelungsfläche des Gartengeräte-Aufsatzes als Bohrung ausgestaltet sein, in die der Verriegelungszapfen des Verriegelungselements im Verriegelungszustand eingreift.

Des Weiteren weist das Verriegelungselement mindestens einen Steuerzapfen auf, der die Gegenfläche des Verriegelungselements zur Steuerfläche des Schlittens bildet. Durch Zusammenwirken der Steuerflächen des Schlittens mit der als Steuerzapfen ausgebildeten Gegenfläche des Verriegelungselements, d. h. eine Kraftübertragung vom Schlitten auf das mindestens eine Verriegelungselement, wird die Bewegung des Verriegelungselements zwischen der Verriegelungsstellung und der Entriegelungsstellung bewirkt.

Wird der Verriegelungszapfen des Verriegelungselements an einer Oberfläche, die nach außen vom Schaft weg gerichtet ist, abgeschrägt, dann kann das Verriegelungselement durch das Aufstecken des Aufsatzes auf den Schaft vorübergehend ohne Betätigung des Betätigungselements von seiner Verriegelungsstellung in seine Entriegelungsstellung gedrückt werden. Dadurch wird das Aufstecken des Aufsatzes auf den Schaft ermöglicht, ohne dass beim Aufstecken das Verriegelungselement durch Betätigen des Betätigungselements in die Entriegelungsstellung bewegt werden muss. Der Aufsatz kann damit ohne jegliche Betätigung durch den Benutzer einfach auf den Schaft des Wechselstiels aufgesteckt werden. Durch die nur einseitige Abschrägung des Verriegelungszapfens des Verriegelungselements kann gleichzeitig verhindert werden, dass der Aufsatz ohne Betätigung des Betätigungselements zum Bewegen des Verriegelungselements von der Verriegelungsstellung in die Entriegelungsstellung vom Schaft gelöst werden kann. Der Aufsatz ist damit sicher und vor unbeabsichtigtem Lösen geschützt mit dem Wechselstiel verbunden, jedoch einfach auf diesen aufsteckbar.

Ist das Verriegelungselement mit einem Steuerzapfen versehen, der die Gegenfläche des Verriegelungselements zur Steuerfläche des Schlittens bildet, mittels derer die Bewegung des Verriegelungselementes bewirkt wird, so kann der Steuerzapfen des Verriegelungselements durch die Vorspannung des Verriegelungselements auch in Anlage an die Steuerfläche des Schlittens gedrückt werden. Dadurch wird sichergestellt, dass das Verriegelungselement stets eine festgelegte, durch die Gestaltung der Steuerfläche des Schlittens vorgegebene Position einnimmt und sich nicht von diesem kinematisch unabhängig bewegt. Letzteres ist nur dann der Fall, wenn das Verriegelungselement durch äußere Kräfte des Aufsatzes aus seiner Verriegelungsstellung in die Entriegelungsstellung gedrückt wird.

In einer vorteilhaften Ausgestaltung kann der Schlitten so gestaltet sein, dass er einen zur Führung des Schlittens in Längsrichtung des Schafts ausgebildeten Abschnitt sowie einen zweiten Abschnitt, an dem die Steuerflächen ausgebildet sind, aufweist. Der Abschnitt zur Führung des Schlittens in Längsrichtung des Schaftes kann dabei geometrisch vorteilhafterweise an die geometrische Gestaltung des Schaftes angepasst sein. Ist der Schaft beispielsweise ein ovales oder ein rechteckiges Rohr, weist der Abschnitt des Schlittens zur Führung in Längsrichtung des Schaftes eine dementsprechende Kontur auf. Der Abschnitt zur Ausbildung der Steuerflächen kann dagegen so gestaltet sein, wie es für das Erzeugen geeigneter Steuerflächen optimal ist. Dadurch kann der Schlitten so gestaltet werden, dass er z. B. unter weitestgehender Vermeidung von Gleitreibung im Inneren des Schaftes geführt werden kann, während durch geeignete Ausbildung der Steuerflächen beispielsweise ein bezüglich der Kinematik gewünschter Bewegungsablauf des bzw. der Verriegelungselemente hervorgerufen werden kann. So können die Steuerflächen beispielsweise so gestaltet werden, dass die Verriegelungselemente bei nur einer kurzen Verschiebung des Schlittens von der Ausgangs- in die Betätigungsstellung, oder wahlweise bei einer langen Verschiebung des Schlittens von der Ausgangs- in die Betätigungsstellung, von der Verriegelungsstellung in die Entriegelungsstellung bewegt werden können. Auch können die Steuerflächen so gestaltet werden, dass sich bei einer geringfügigen Bewegung des Betätigungselementes und damit des Schlittens die Verriegelungselemente kaum aus der Verriegelungsstellung bewegen und die Bewegung des Verriegelungselements in die Entriegelungsstellung erst kurz vor dem Erreichen der Betätigungsstellung des Befestigungselementes geschieht, um ein unbeabsichtigtes Entriegeln bei einer kleinen, unbeabsichtigten Bewegung des Betätigungselements zu verhindern.

Weist der Schlitten neben dem Abschnitt zur Führung des Schlittens in der Längsrichtung des Schaftes auch einen Abschnitt zur Ausbildung der Steuerflächen auf, so können die Steuerflächen beispielsweise dadurch gebildet werden, dass in dem Abschnitt zur Ausbildung der Steuerflächen Öffnungen vorgesehen werden und die Steuerflächen durch die Begrenzungswandungen der Öffnung bzw. der Öffnungen in dem Abschnitt zur Ausbildung der Steuerflächen gebildet werden.

Wie bereits vorstehend beschrieben wurde, kann der kinematische Zusammenhang zwischen der Bewegung des Schlittens, die durch das Betätigungselement hervorgerufen wird, von seiner Ausgangsstellung in seine Betätigungsstellung, und der Bewegung des mindestens einen Verriegelungselements von der Verriegelungsstellung in die Entriegelungsstellung durch geeignete Gestaltung der Steuerflächen des Schlittens beeinflusst werden. In einer vorteilhaften Ausführung nimmt die Weite einer Öffnung in dem Abschnitt zur Ausbildung der Steuerflächen in Blickrichtung von der Ausgangsstellung in die Betätigungsstellung des Schlittens zu. Wird der Schlitten somit von der Ausgangsstellung in die Betätigungsstellung gebracht, so nimmt die Weite der Öffnung an der Stelle, an der sich momentan die Gegenfläche des Verriegelungselements befindet, mit zunehmender Bewegung des Schlittens von der Ausgangs- in die Betätigungsstellung des Schlittens ab. Dies ermöglicht es, z. B. durch Zusammenwirken eines Steuerzapfens des Verriegelungselements mit den Begrenzungswandungen der Öffnung, das mindestens eine Verriegelungselement von der Verriegelungsstellung in die Entriegelungsstellung zu bringen, indem der Schlitten von der Ausgangsstellung in die Betätigungsstellung gebracht wird. Die Öffnung kann beispielsweise trapezförmig gestaltet werden, wobei die Symmetrieachse des Trapezes parallel zur Längsrichtung des Schaftes ist.

In einer besonders vorteilhaften Ausgestaltung weist der Abschnitt zur Ausbildung der Steuerflächen des Schlittens zwei zungenartige Fortsätze auf, die einander gegenüberliegen. In den zungenartigen Fortsätzen sind die Steuerflächen des Schlittens ausgebildet. In dieser Ausführung ist das mindestens eine Verriegelungselement zwischen den beiden einander gegenüber liegenden Fortsätzen angeordnet. Jedes Verriegelungselement weist mindestens zwei Steuerzapfen auf. Jeder der beiden Steuerzapfen des Verriegelungselements wirkt dabei mit jeweils einer Steuerfläche eines Fortsatzes zusammen. Durch diese Anordnung des mindestens einen Verriegelungselements zwischen den beiden einander gegenüber liegenden zungenartigen Fortsätzen können Kräfte vom Schlitten auf die Verriegelungselemente aufgrund der symmetrischen Ausgestaltung der Fortsätze symmetrisch auf das Verriegelungselement übertragen und Kippmomente weitgehend vermieden werden. Durch die symmetrische Kraftübertragung von den Steuerflächen des Schlittens auf die Gegenflächen des Verriegelungselements wird ein Verkanten des Verriegelungselements verhindert und der Verschleiß des Verriegelungselements verringert.

In einer weiteren vorteilhaften Ausgestaltung ist das Betätigungselement als Schieber ausgestaltet, der mit dem Schlitten direkt oder indirekt verbunden ist. Bei der direkten Verbindung ist das Betätigungselement ohne Zwischenelemente am Schlitten befestigt. Bei der indirekten Verbindung erfolgt die Befestigung des Betätigungselements am Schlitten durch weitere Zwischenelemente. In einer weiteren vorteilhaften Ausgestaltung wird der Schlitten durch eine Rückstellfeder von der Betätigungsstellung in die Ausgangsstellung vorgespannt.

Ohne die zusätzliche Rückstellfeder wird die Vorspannung des Schlittens von der Betätigungs- in die Ausgangsstellung lediglich durch die Vorspannung der Verriegelungselemente bewirkt, wenn diese mit den Steuerflächen des Schlittens zusammenwirken. Durch die Vorspannung des mindestens einen Verriegelungselements werden Kräfte vom Verriegelungselement so auf den Schlitten ausgeübt, dass dieser auch ohne Rückstellfeder von der Betätigungs- in die Ausgangsstellung vorgespannt wird.

Aufgrund der Vorspannung des Schlittens durch die zusätzliche Rückstellfeder sind vom Benutzer beim Bewegen des Schlittens aus der Ausgangs- in die Betätigungsstellung Kräfte entgegen der Federkraft der Rückstellfeder aufzubringen. Dagegen wird der Schlitten von der Betätigungs- in die Ausgangsstellung durch die Kraft der Rückstellfeder automatisch zurückgeführt. Dadurch ist sichergestellt, dass der Schlitten ohne äußere Einwirkung stets in der Ausgangsstellung bleibt, in der auch die Verriegelungselemente in der Verriegelungsstellung sind. Dadurch ist sichergestellt, dass der Aufsatz durch die in Verriegelungsstellung befindlichen Verriegelungselemente stets sicher mit dem Schaft verriegelt ist und erst durch Aufbringen von äußeren Kräften über das Betätigungselement auf den Schlitten, die die Vorspannkraft der Rückstellfeder überschreiten müssen, eine Entriegelung des Aufsatzes vom Schaft erfolgt.

Ist der Schaft als Rohr gestaltet, so wird der Aufsatz in Längsrichtung des Schaftes auf diesen aufgesteckt. Nach dem Entriegeln wird er in Längsrichtung des Schaftes wieder von diesem abgenommen. Sowohl die Verriegelung des Aufsatzes in Längsrichtung des Schaftes als auch die Sicherung des Aufsatzes vor Verdrehen um die Längsachse des Schaftes erfolgen bereits durch das mindestens eine Verriegelungselement. Soweit die Sicherung des Aufsatzes gegen Verdrehen auf dem Schaft lediglich durch das Verriegelungselement erfolgt, werden bei der Benutzung des Wechselstiels von dem Aufsatz möglicherweise Querkräfte auf das Verriegelungselement ausgeübt, die zu einem erhöhten Verschleiß des Verriegelungselements führen können. Dies kann dadurch verhindert werden, dass der Schaft z. B. als Rohr mit ovalem oder rechteckigem Querschnitt ausgestaltet wird, das selbst eine Verdrehsicherung des Aufsatzes um den Schaft bewirkt. Des weiteren ist es für eine Verdrehsicherung auch denkbar, den Schaft oder den Aufsatz mit entsprechenden Nuten und einer geeigneten Gegenkontur jeweils auf dem Aufsatz bzw. dem Schaft vorzusehen, um eine Verdrehsicherung des Aufsatzes um den Schaft zu bewirken. Dann kann das Ausüben von Querkräften durch den Aufsatz auf das Verriegelungselement, die nicht in Längsrichtung des Schaftes wirken, verhindert werden.

### c) Ausführungsbeispiel

Ein Ausführungsbeispiel wird nachfolgend anhand der beigefügten Zeichnung beschrieben. Es zeigt:
- Fig. 1:: eine Explosionsdarstellung einer Ausführungsform des erfindungsgemäßen Wechselstiels für Gartengeräte und Haushaltsgeräte.

Die in Fig. 1 dargstellte Ausführungsform eines erfindungsgemäßen Wechselstiels 1 weist einen als Rohr mit ovalem Querschnitt ausgestalteten Schaft 2 auf. An diesem Schaft 2 kann ein ergonomisch gestalteter Griff 4 befestigt sein. In dem Schaft 2 ist ein Schlitten 5 angeordnet, der in Längsrichtung L des Schaftes 2 beweglich ist.

Die in Fig. 1 dargestellte Ausführungsform des Schlittens 5 weist einen Abschnitt 17 zur Führung des Schlittens 5 im Schaft 2 sowie einen Abschnitt 18 des Schlittens 5 zur Ausbildung der Steuerflächen 6 auf. Der Abschnitt 17 zur Führung des Schlittens 5 im Schaft 2 ist zumindest teilweise an die in Fig. 1 ovale Innenkontur des Schaftes 2 angepasst.

An dem Abschnitt 17 zur Führung des Schlittens 5 im Schaft 2 ist ein Betätigungselement 8 befestigt, das in der hier dargestellten Ausführungsform durch eine Öffnung 24 im Schaft 2 hindurch gesteckt ist und durch eine Verrastung in einer Aussparung des Schlittens 5 an letzterem befestigt ist. Das Betätigungselement 8 ragt nach außen vom Schaft 2 weg und kann somit von außen durch einen Benutzer betätigt werden. Dabei wird es in Längsrichtung L des Schaftes bewegt und bewirkt dadurch die Bewegung des Schlittens 5 in Längsrichtung L des Schaftes 2 innerhalb desselben.

Der Abschnitt 18 des Schlittens 5 zur Ausbildung der Steuerflächen 6 weist zwei zungenartige Fortsätze 22 auf, die einander gegenüber liegen. Diese weisen jeweils eine Öffnung 19 auf, deren Begrenzungswandungen 20 die Steuerflächen 6 des Schlittens 5 bilden. In der hier dargestellten Ausführungsform nimmt die Weite der Öffnung in Blickrichtung B von der Ausgangs- in die Betätigungsstellung des Schlittens 5 zu. Die Öffnungen 19 der beiden zungenartigen Fortsätze 22 sind in der hier dargestellten Ausführungsform jeweils trapezförmig gestaltet. An den Begrenzungswandungen 20 der Öffnungen 19 der beiden zungenartigen Fortsätze 22 liegen dabei jeweils Steuerzapfen 16 der in der hier dargestellten Ausführungsform zwei Verriegelungselemente 3 an. Diese Steuerzapfen 16 bilden die Gegenflächen 7 der Verriegelungselemente 3, die mit den Steuerflächen 6 des Schlittens 5 zusammenwirken.

Die in der hier dargestellten Ausführungsform zwei Verriegelungselemente 3 weisen jeweils einen Verriegelungszapfen 15 auf, die an einer vom Schaft 2 weg weisenden Oberfläche 25 abgeschrägt sind. Im montierten Zustand, d. h. wenn sich der Schlitten 5 und die Verriegelungselemente 3 in dem Inneren des Schaftes 2 befinden, ragen die Verriegelungszapfen 15 der beiden Verriegelungselemente 3 durch Bohrungen 26 in der Wandung des rohrförmigen Schaftes 2 nach außen. Sie greifen dann in (hier nicht dargestellte) Bohrungen in einem rohrförmigen Abschnitt des Aufsatzes ein, wenn der rohrförmige Abschnitt des Aufsatzes in Längsrichtung L des Schaftes 2 auf den Schaft 2 aufgesteckt wird, und bewirken dann die Verriegelung des Schaftes 2 mit dem Aufsatz. Dabei sind die beiden Verriegelungselemente 3 durch eine Druckfeder 9 derart vorgespannt, dass die Druckfeder 9 eine Vorspannung der beiden Verriegelungselemente 3 in die Verriegelungsstellung bewirkt. Die beiden Verriegelungselemente 3 werden dann von innen in Richtung der Wandung des Schaftes 2 gedrückt, so dass die Verriegelungszapfen 15 der Verriegelungselemente 3 stets nach außen durch die Bohrung 26 ragen.

Wird der Schlitten 5 durch Betätigen des Betätigungselements 8, d. h. durch Verschieben des Betätigungselements 8 in Richtung des Griffs 4 vorzugsweise mittels des Daumens der Hand eines Benutzers, in der Längsrichtung L des Schaftes 2 von der Ausgangs- in die Betätigungsstellung gebracht, so gleiten die Steuerzapfen 16 der Verriegelungselemente 3 an den Begrenzungswandungen 20 der Öffnungen 19 der zungenartigen Fortsätze 22 des Schlittens 5, an denen sie durch die Vorspannung der Druckfeder 9 stets anliegen. Durch die trapezförmige Gestaltung der Öffnungen 19 der zungenartigen Fortsätze 22 werden die Steuerzapfen 16 der Verriegelungselemente 3 dabei zunehmend von der Innenwandung des Schaftes 2 weg zum Inneren des Schaftes 2 bewegt. Die Verriegelungszapfen 15 der Verriegelungselemente 3 bewegen sich dadurch durch die Öffnungen 26 des Schaftes 2 zum Inneren des Schaftes 2. Sie bewegen sich dadurch aus den entsprechenden Bohrungen in einem (hier nicht dargestellten) rohrförmigen Abschnitt des Aufsatzes, der auf den Schaft 2 aufgesteckt ist, heraus und geben damit die Bohrungen des Aufsatzes frei, so dass der Aufsatz in Längsrichtung L des Schaftes 2 vom Schaft 2 abgezogen werden kann. Der Schlitten 5 befindet sich dann in seiner Betätigungsstellung und die beiden Verriegelungselemente 3 befinden sich dann in ihrer Entriegelungsstellung.

Wird das Betätigungselement 8 losgelassen, so bewirkt die durch die Druckfeder 9 hervorgerufene Vorspannung der Verriegelungselemente 3 in Richtung des Äußeren des Schaftes 2, dass sich die Verriegelungselemente 3 wieder in die Verriegelungsstellung bewegen. Dabei werden durch die Steuerzapfen 16 der Verriegelungselemente 3 Kräfte auf die Begrenzungswandungen 20 der Öffnungen 19 der beiden zungeartigen Fortsätze 22 ausgeübt. Durch diese Kräfte wird aufgrund der trapezförmigen Gestaltung der Öffnungen 19 in den zungenartigen Fortsätzen 22 eine Kraftkomponente in Längsrichtung L des Schaftes 2 auf den Schlitten 5 ausgeübt, durch die der Schlitten 5 wieder in seine Ausgangsstellung bewegt wird.

Die Bewegung des Schlittens 5 aus der Betätigungs- in die Ausgangsstellung kann zusätzlich noch dadurch unterstützt werden, dass an dem Schlitten 5 eine (in der in Figur 1 dargestellten Ausführungsform nicht vorgesehene) Rückstellfeder angeordnet ist, die den Schlitten 5 in die Ausgangsstellung vorspannt. Beim Bewegen des Schlittens 5 aus der Ausgangs- in die Betätigungsstellung ist dann dabei zusätzlich die Vorspannung der Rückstellfeder zu überwinden.

Die beiden Verriegelungselemente 3 der dargestellten Ausführungsform sind in einem im Inneren des Schaftes 2 befestigten Käfig 10 geführt. Die beiden Verriegelungselemente 3 weisen dabei Führungsflächen 12 auf, die in Führungsbahnen 11 des Käfigs 10 geführt werden. Der Käfig 10 besteht in der hier dargestellten Ausführungsform aus zwei Hälften 13, die jeweils eine Hälfte der Führungsbahn 11 aufweisen. Beide Verriegelungselemente 3 weisen jeweils zwei Steuerzapfen 16 auf, die mit einer Steuerfläche 6 der beiden zungenartigen Fortsätze 22 des Schlittens 5 zusammenwirken. Dabei liegen die Steuerzapfen 16 durch die Vorspannung mittels der Druckfeder 9 in ständiger Anlage an den die Steuerflächen 6 bildenden Begrenzungswandungen 20 der Öffnungen 19 der zungenartigen Fortsätze 22 an.

Die beiden Hälften 13 des Käfigs 10 werden miteinander verbunden, indem ein Befestigungselement 14 durch Bohrungen 27 in dem Schaft 2 hindurch gesteckt wird, welches gleichzeitig Bohrungen 28 in den beiden Hälften 13 des Käfigs 10 durchgreift und dadurch die beiden Käfighälften 13 jeweils im Schaft 2 fixiert. In der hier dargestellten Ausführungsform ist das Befestigungselement 14 als Niet ausgeführt, dessen beide Enden auf den Außenseiten der Bohrungen 27 des Schaftes 2 umgebördelt werden, so dass der Käfig 10 dauerhaft und durch den Benutzer unlösbar im Inneren des Schaftes 2 befestigt ist.

Die beiden Verriegelungselemente 3 werden somit durch die Führungsbahnen 11 der Käfighälften 13 in Längsrichtung L des Schaftes 2 fixiert, sind jedoch in einer zu der Längsrichtung L des Schaftes 2 senkrechten Richtung R verschiebbar. Dementsprechend können sie von ihrer Verriegelungsstellung, in die sie durch die Druckfeder 9 vorgespannt sind, durch Bewegung des Schlittens 5 und dem damit verbundenen Zusammenwirken der Steuerflächen 6 des Schlittens 5 mit den hier als Steuerzapfen 16 ausgebildeten Gegenflächen 7 der Verriegelungselemente 3 in ihre Entriegelungsstellung gebracht werden.

Durch die abgeschrägte Oberfläche 25 der Verriegelungszapfen 15 der Verriegelungselemente 3 kann der Aufsatz ohne Betätigung des Betätigungselements 8 auf den Schaft 2 aufgesteckt werden. Durch Zusammenwirken eines rohrförmigen Abschnitts des Aufsatzes mit den abgeschrägten Verriegelungszapfen 15 der Verriegelungselemente 3 werden dabei die Verriegelungselemente 3 von der Verriegelungsstellung ohne Betätigung des Betätigungselements 8 in die Entriegelungsstellung gedrückt. Sobald eine zur Verriegelung dienende Bohrung eines rohrförmigen Abschnitts des Aufsatzes über dem Verriegelungszapfen 15 des Verriegelungselements 3 zu liegen kommt, werden die Verriegelungszapfen 15 der Verriegelungselemente 3 durch die Vorspannung der Druckfeder 9 in diese Bohrung des Aufsatzes hineingedrückt und verriegeln den Aufsatz mit dem Schaft 2. Durch die einseitige Abschrägung der Verriegelungszapfen 15 kann der Aufsatz dann nicht mehr vom Schaft 2 abgezogen werden, ohne dass das Verriegelungselement 3 durch Betätigen des Betätigungselements 8 von der Verriegelungs- in die Entriegelungsstellung gebracht wird. Dadurch ist der Aufsatz gegen axiales Verschieben auf dem Schaft 2 gesichert. Dadurch, dass der Schaft 2 in der hier dargestellten Ausführungsform einen ovalen Querschnitt aufweist, kann der Aufsatz auch nicht um die Längsrichtung L des Schaftes 2 verdreht werden.

Der Schaft 2 ist an seinem dem Aufsatz zugewandten Ende durch eine Verschlusskappe 21 verschlossen. Diese verhindert, dass Schmutz in das Innere des Schaftes 2 eindringt und zu einem Blockieren des Verriegelungsmechanismus führt.

### BEZUGSZEICHENLISTE

- 1: Wechselstiel
- 2: Schaft
- 3: Verriegelungselement
- 4: Griff
- 5: Schlitten
- 6: Steuerfläche des Schlittens
- 7: Gegenfläche des Verriegelungselements
- 8: Betätigungselement
- 9: Druckfeder
- 10: Käfig
- 11: Führungsbahn des Käfigs
- 12: Führungsfläche des Verriegelungselements
- 13: Käfighälfte
- 14: Befestigungselement
- 15: Verriegelungszapfen des Verriegelungselements
- 16: Steuerzapfen
- 17,18: Abschnitte
- 19: Öffnung
- 20: Begrenzungswandung
- 21: Verschlusskappe
- 22: zungenartige Fortsätze
- 24: Öffnung im Schaft für das Betätigungselement
- 25: abgeschrägte Oberfläche
- 26,27,28: Bohrungen
- B: Blickrichtung von der Ausgangs- in die Betätigungsstellung
- L: Längsrichtung
- R: zur Längsrichtung senkrechte Richtung

## Patentansprüche

1. Wechselstiel (1) für Gartengeräte oder Haushaltsgeräte mit
• einem Schaft (2), an dem verschiedene Gartengeräte- oder Haushaltsgeräte-Aufsätze lösbar befestigbar sind,
• mindestens einem Verriegelungselement (3) zur Verriegelung eines Gartengeräte- bzw. Haushaltsgeräte-Aufsatzes mit dem Schaft (2), das zumindest in einer zu der Längsrichtung (L) des Schafts (2) senkrechten Richtung (R) in eine Verriegelungsstellung bewegbar ist, in welcher ein an dem Wechselstiel (1) zu befestigender Gartengeräte- bzw. Haushaltsgeräte-Aufsatz mit dem Schaft (2) verriegelbar ist,
• einem in Längsrichtung (L) des Schafts (2) beweglichen Schlitten (5), der
Steuerflächen (6) zum Steuern des Verriegelungselements (3) aufweist, wobei die Bewegung des Schlittens (5) durch Zusammenwirken der Steuerflächen (6) des Schlittens (5) mit entsprechenden Gegenflächen (7) des Verriegelungselements (3) die Bewegung des mindestens einen Verriegelungselements (3) zwischen der Verriegelungsstellung und einer Entriegelungsstellung, in welcher ein an dem Wechselstiel (1) zu befestigender Gartengeräte- bzw. Haushaltsgeräte-Aufsatz nicht mit dem Schaft (2) verriegelbar ist, bewirkt,
und wobei
• das Verriegelungselement (3) in die Verriegelungsstellung vorgespannt ist,
• der Schlitten (5) im Inneren des Schaftes (2) angeordnet ist, und
• ein Betätigungselement (8) zum Bewegen des Schlittens (5) vorhanden ist, wobei das Betätigungselement (8) durch einen Benutzer von außerhalb des Schaftes (2) betätigbar ist und die Betätigung des Betätigungselements (8) den Schlitten (5) im Inneren des Schaftes (2) derart von einer Ausgangsstellung in eine Betätigungsstellung bewegt, dass das Verriegelungselement (3) entgegen seiner Vorspannung von der Verriegelungsstellung in die Entriegelungsstellung bewegt wird,
**dadurch gekennzeichnet, dass**
• das mindestens eine Verriegelungselement (3) durch einen im Schaft (2) ortsfest angeordneten Käfig (10) zumindest in einer zu der Längsrichtung (L) des Schafts (2) senkrechten Richtung (R) bewegbar geführt ist.

2. Wechselstiel (1) nach Anspruch 1,
**dadurch gekennzeichnet, dass**
der Käfig (10) eine Führungsbahn (11) und das Verriegelungselement (3) Führungsflächen (12) aufweist, durch die das Verriegelungselement (3) in der Führungsbahn (11) des Käfigs (10) geführt wird.

3. Wechselstiel (1) nach Anspruch 1 oder 2,
**dadurch gekennzeichnet, dass**
der Käfig (10) aus zwei Hälften (13) besteht und die beiden Hälften (13) durch ein Befestigungselement (14), mittels dessen der Käfig (10) im Schaft (2) ortsfest befestigt ist, miteinander verbunden sind.

4. Wechselstiel (1) nach einem der vorangehenden Ansprüche,
**dadurch gekennzeichnet, dass**
genau zwei Verriegelungselemente (3) vorhanden sind, die jeweils in eine Verriegelungsstellung vorgespannt sind.

5. Wechselstiel (1) nach Anspruch 4,
**dadurch gekennzeichnet, dass**
zwischen den beiden Verriegelungselementen (3) wenigstens eine Druckfeder (9) angeordnet ist, welche deren Vorspannung in die Verriegelungsstellungen bewirkt.

6. Wechselstiel (1) nach Anspruch 4,
**dadurch gekennzeichnet, dass**
zwischen den beiden Verriegelungselementen (3) genau eine Druckfeder (9) angeordnet ist, welche deren Vorspannung in die Verriegelungsstellungen bewirkt.

7. Wechselstiel (1) nach einem der vorangehenden Ansprüche,
**dadurch gekennzeichnet, dass**
das Verriegelungselement (3) einen sich in seiner Bewegungsrichtung (R) erstreckenden Verriegelungszapfen (15), der im verriegelten Zustand mit einer Verriegelungsfläche des Gartengeräte- bzw. Haushaltsgeräteaufsatzes zusammenwirkt, sowie mindestens einen Steuerzapfen (16) aufweist, der die Gegenfläche (7) des Verriegelungselements (3) zur Steuerfläche (6) des Schlittens (5) bildet.

8. Wechselstiel (1) nach Anspruch 7,
**dadurch gekennzeichnet, dass**
der Verriegelungszapfen (15) des Verriegelungselements (3) an seiner nach außen vom Schaft (2) weg gerichteten Oberfläche (25) derart abgeschrägt ist, dass das Verriegelungselement (3) während eines Aufsteckens des Gartengeräte- bzw. Haushaltsgeräteaufsatzes auf den Schaft (2) vorübergehend von seiner Verriegelungsstellung in seine Entriegelungsstellung gedrückt wird.

9. Wechselstiel (1) nach Anspruch 7 oder 8,
**dadurch gekennzeichnet, dass**
der Steuerzapfen (16) des Verriegelungselements (3) durch die Vorspannung des Verriegelungselements (3) in Anlage an die Steuerfläche (6) des Schlittens (5) gedrückt wird.

10. Wechselstiel (1) nach einem der vorangehenden Ansprüche,
**dadurch gekennzeichnet, dass**
der Schlitten (5) einen zur Führung des Schlittens (5) in Längsrichtung (L) des Schafts (2) ausgebildeten Abschnitt (17) sowie einen Abschnitt (18) zur Ausbildung der Steuerflächen (6) aufweist.

11. Wechselstiel (1) nach Anspruch 10,
**dadurch gekennzeichnet, dass**
die Steuerflächen (6) durch die Begrenzungswandungen (20) einer Öffnung (19) in dem Abschnitt (18) zur Ausbildung der Steuerflächen (6) gebildet werden.

12. Wechselstiel (1) nach Anspruch 11,
**dadurch gekennzeichnet, dass**
die Weite der Öffnung (19) in Blickrichtung (B) von der Ausgangsstellung in die Betätigungsstellung des Schlittens (5) zunimmt.

13. Wechselstiel (1) nach einem der vorangehenden Ansprüche 10-12,
**dadurch gekennzeichnet, dass**
der Abschnitt (18) zur Ausbildung der Steuerflächen (6) zwei einander gegenüberliegende zungenartige Fortsätze (22) zur Ausbildung der Steuerflächen (6) aufweist, jedes Verriegelungselement (3) zwischen den beiden einander gegenüberliegenden Fortsätzen (22) angeordnet ist und zwei Steuerzapfen (16) aufweist, die jeweils mit einer Steuerfläche (6) eines Fortsatzes (22) zusammenwirken.

14. Wechselstiel (1) nach einem der vorangehenden Ansprüche,
**dadurch gekennzeichnet, dass**
das Betätigungselement (8) als ein mit dem Schlitten (5) direkt oder indirekt verbundener Schieber ausgestaltet ist.

15. Wechselstiel (1) nach einem der vorangehenden Ansprüche,
**dadurch gekennzeichnet, dass**
der Schlitten (5) durch eine Rückstellfeder von der Betätigungsstellung in die Ausgangsstellung vorgespannt wird.

## Claims

1. Interchangeable handle (1) for garden tools or domestic implements comprising
• a shaft (2) to which different garden tool or domestic implement attachmentscan be detachably secured,
• at least one lock element (3) for locking a garden tool or domestic implement attachment to the shaft (2) which can be moved at least in a direction (R) perpendicular to the longitudinal direction (L) of the shaft (2) into a locking position in which a garden tool or domestic implement attachment to be secured to the interchangeable handle (1) can be locked to the shaft (2),
• a slide (5) displaceable in the longitudinal direction (L) of the shaft (2) which has control surfaces (6) for controlling the lock element (3),
and, due to co-operation of the control surfaces (6) of the slide (5) with corresponding complementary surfaces (7) of the lock element (3), the movement of the slide (5) causes the at least one lock element (3) to move between the locking position and a release position in which a garden tool or domestic implement attachment to be secured to the interchangeable handle (1) cannot be locked to the shaft (2),
and
• the lock element (3) is biased into the locking position,
• the slide (5) is disposed in the interior of the shaft (2), and
• an operating element (8) for moving the slide (5) is provided and the operating element (8) can be operated by a user from outside the shaft (2) and operation of the operating element (8) moves the slide (5) in the interior of the shaft (2) from an initial position into an operating position in such a way that the lock element (3) is moved from the locking position into the release position opposing its biasing force,
**characterised in that**
• the at least one lock element (3) can be moved in at least a direction (R) perpendicular to the longitudinal direction (L) of the shaft (2) guided by a stationary cage (10) disposed in the shaft (2).

2. Interchangeable handle (1) as claimed in claim 1,
**characterised in that**
the cage (10) has a guide track (11) and the lock element (3) has guide surfaces (12) by means of which the lock element (3) is guided in the guide track (11) of the cage (10).

3. Interchangeable handle (1) as claimed in claim 1 or 2,
**characterised in that**
the cage (10) comprises two halves (13) and the two halves (13) are connected to one another by a fixing element (14) by means of which the cage (10) is held in a stationary arrangement in the shaft (2).

4. Interchangeable handle (1) as claimed in one of the preceding claims,
**characterised in that**
precisely two lock elements (3) are provided, which are biased respectively into a locking position.

5. Interchangeable handle (1) as claimed in claim 4,
**characterised in that**
at least one compression spring (9) is disposed between the two lock elements (3) which causes the latter to be biased into the locking positions.

6. Interchangeable handle (1) as claimed in claim 4,
**characterised in that**
precisely one compression spring (9) is disposed between the two lock elements (3), which causes the latter to be biased into the locking positions.

7. Interchangeable handle (1) as claimed in one of the preceding claims,
**characterised in that**
the lock element (3) has a locking pin (15) extending in its direction of movement (R) which co-operates with a locking surface of the garden tool or domestic implement attachment in the locked state as well as at least one control pin (16) constituting the surface (7) of the lock element (3) complementing the control surface (6) of the slide (5).

8. Interchangeable handle (1) as claimed in claim 7,
**characterised in that**
the locking pin (15) of the lock element (3) is angled in such a way at its surface (25) directed outwards away from the shaft (2) that the lock element (3) is temporarily pushed from its locking position into its release position whilst the garden tool or domestic implement attachment is being attached to the shaft (2).

9. Interchangeable handle (1) as claimed in claim 7 or 8,
**characterised in that**
the control pin (16) of the lock element (3) is pushed into abutment with the control surface (6) of the slide (5) due to the biasing of the lock element (3).

10. Interchangeable handle (1) as claimed in one of the preceding claims,
**characterised in that**
the slide (5) has a portion (17) designed to guide the slide (5) in the longitudinal direction (L) of the shaft (2) and a portion (18) forming the control surfaces (6).

11. Interchangeable handle (1) as claimed in claim 10,
**characterised in that**
the control surfaces (6) are formed by the boundary walls (20) of an orifice (19) in the portion (18) forming the control surfaces (6).

12. Interchangeable handle (1) as claimed in claim 11,
**characterised in that**
the width of the orifice (19) increases as viewed in the direction (B) from the initial position to the operating position of the slide (5).

13. Interchangeable handle (1) as claimed in one of preceding claims 10-12,
**characterised in that**
the portion (18) forming the control surfaces (6) has two tab-type extensions (22) lying opposite one another forming the control surfaces (6), each lock element (3) is disposed between the two mutually opposite extensions (22) and has two control pins (16) which respectively co-operate with a control surface (6) of an extension (22).

14. Interchangeable handle (1) as claimed in one of the preceding claims,
**characterised in that**
the operating element (8) is provided in the form of a pushing means directly or indirectly connected to the slide (5).

15. Interchangeable handle (1) as claimed in one of the preceding claims,
**characterised in that**
the slide (5) is biased from the operating position into the initial position by means of a return spring.

## Revendications

1. Manche interchangeable (1) pour outils de jardin ou appareils ménagers comportant
- une tige (2), à laquelle peuvent être fixés, de façon amovible, des embouts différents pour outils de jardin ou des appareils ménagers,
- au moins un élément de verrouillage (3) servant au verrouillage d'un embout pour outils de jardin ou appareils ménagers avec la tige (2), élément de verrouillage qui peut être déplacé, au moins dans un sens perpendiculaire (R) au sens longitudinal (L) de la tige (2), dans une position de verrouillage, dans laquelle un embout pour outils de jardin ou appareils ménagers à fixer sur le manche interchangeable peut être verrouillé avec la tige (2).
- un chariot (5) déplaçable dans le sens longitudinal (L) de la tige (2), chariot qui présente des surfaces de commande (6) pour commander l'élément de verrouillage (3),
grâce au concours des surfaces de commande (6) du chariot (5) avec des contre-surfaces correspondantes (7) de l'élément de verrouillage (3), le déplacement du chariot (5) ayant pour effet le déplacement de l'au moins un élément de verrouillage (3) entre la position de verrouillage et une position de déverrouillage, dans laquelle un embout pour outils de jardin ou appareils ménagers ne peut pas être verrouillé avec la tige (2), et,
- l'élément de verrouillage (3) étant précontraint dans la position de verrouillage,
- le chariot (5) étant disposé à l'intérieur de la tige (2), et
- un élément d'actionnement (8) étant prévu pour le déplacement du chariot (5), l'élément d'actionnement (8) étant actionnable par un utilisateur depuis l'extérieur de la tige (2) et l'actionnement de l'élément d'actionnement (8) déplaçant le chariot (5) à l'intérieur de la tige (2), depuis une position de sortie dans une position d'actionnement, de façon que l'élément de verrouillage (3) est déplacé, à l'encontre de sa précontrainte, depuis la position de verrouillage dans la position de déverrouillage, **caractérisé en ce que**
- l'au moins un élément de verrouillage (3) est guidé de façon mobile, au moins dans un sens perpendiculaire au sens longitudinal (L) de la tige (2), grâce à une cage (10) disposée stationnaire dans la tige (2).

2. Manche interchangeable (1) suivant la revendication 1, **caractérisé en ce que** la cage (10) présente une voie de guidage (11) et l'élément de verrouillage (3) présente des surfaces de guidage (12), au moyen desquelles l'élément de verrouillage (3) est guidé dans la voie de guidage (11) de la cage (10).

3. Manche interchangeable (1) suivant la revendication 1 ou 2, **caractérisé e n ce que** la cage (10) est constituée par deux moitiés (13), que les deux moitiés (13) sont reliées par l'intermédiaire d'un élément de fixation (14), au moyen duquel la cage (10) est fixée stationnaire dans la tige (2).

4. Manche interchangeable (1) suivant une des revendications précédentes, **caractérisé en ce que** sont prévus précisément deux éléments de verrouillage (3) qui sont respectivement précontraints dans une position de verrouillage.

5. Manche interchangeable (1) suivant la revendication 4, **caractérisé en ce qu**'entre les deux éléments de verrouillage (3) est disposé au moins un ressort de compression (9) qui génère leur précontrainte dans les positions de verrouillage.

6. Manche interchangeable (1) suivant la revendication 4, **caractérisé en ce qu'**entre les deux éléments de verrouillage (3) est disposé précisément un ressort de compression (9) qui génère leur précontrainte dans les positions de verrouillage.

7. Manche interchangeable (1) suivant une des revendications précédentes, **caractérisé e n ce que** l'élément de verrouillage (13) présente un tourillon de verrouillage (15) s'étendant dans son sens de déplacement (R), qui, en état verrouillé, concourt avec une surface de verrouillage de l'embout pour outils de jardin ou appareils ménagers, ainsi qu'au moins un tourillon de commande (16) qui forme la contre-surface (7) de l'élément de verrouillage (3) par rapport à la surface de commande (6) du chariot (5).

8. Manche interchangeable (1) suivant la revendication 7, **caractérisé en ce que** la surface (25), dirigée vers l'extérieur, à l'opposé de la tige (2), du tourillon de verrouillage (15) de l'élément de verrouillage (3) est biseautée de façon que l'élément de verrouillage (3) est pressé temporairement depuis sa position de verrouillage dans sa position de déverrouillage pendant que l'embout pour outils de jardin ou appareils ménagers est mis en place sur la tige (2).

9. Manche interchangeable (1) suivant la revendication 7 ou 8, **caractérisé en ce qu**'en raison de la précontrainte de l'élément de verrouillage (3), le tourillon de commande (16) de celui-ci est pressé de façon à venir en contact avec la surface de commande (6) du chariot (5).

10. Manche interchangeable (1) suivant l'une des revendications précédentes revendication,
**caractérisé en ce que** le chariot (5) présente une section (17) conçue pour le guidage du chariot (5) dans le sens longitudinal (L) de la tige (2), ainsi qu'une section (18) pour la réalisation des surfaces de commande (6).

11. Manche interchangeable (1) suivant la revendication 10, **caractérisé en ce que** les surfaces de commande (6) sont formées par les parois de limitation (20) d'une ouverture (19) dans la section (18) pour la réalisation des surfaces de commande (6).

12. Manche interchangeable (1) suivant la revendication 11, **caractérisé en ce que** la largeur d'ouverture (19) augmente dans la direction de regard (B) allant de la position de départ à la position d'actionnement du chariot (5).

13. Manche interchangeable (1) suivant une quelconque des revendications 10 à 12,
**caractérisé en ce que** la section (18) pour la réalisation des surfaces de commande (6) présente deux prolongements (22) en forme de languette, opposés l'un à l'autre, pour la réalisation des surfaces de commande (6), que chaque élément de verrouillage (3) est disposé entre les deux prolongements (22), opposés l'un à l'autre, et présente deux tourillons de commande (16) qui concourent respectivement avec une surface de commande (6) d'un prolongement (22).

14. Manche interchangeable (1) suivant une des revendications précédentes, **caractérisé en ce que** l'élément d'actionnement (8) est conçu comme un coulisseau relié directement ou indirectement au chariot (5).

15. Manche interchangeable (1) suivant une des revendications précédentes, **caractérisé en ce que** le chariot (5) est précontraint par un ressort de rappel depuis la position d'actionnement dans la position de départ.
